(19) Europäisches Patentamt European Patent Office Office européen des brevets

(11) **EP 0 993 129 B1**

(12) **EUROPEAN PATENT SPECIFICATION**

(45) Date of publication and mention of the grant of the patent:
**24.01.2007 Bulletin 2007/04**

(51) Int Cl.:
*H04B 7/06* [(2006.01)]     *H04L 1/06* [(2006.01)]
*H04B 1/707* [(2006.01)]

(21) Application number: **99203291.2**

(22) Date of filing: **07.10.1999**

(54) **Channel estimation in space time block coded transmit antenna diversity for WCDMA**

Kanalschätzung in Raum-Zeit blockkodierter Sendeantennendiversität für WCDMA

Estimation de canal dans une diversité d'émission codée par blocs spatials-temporels pour WCDMA

(84) Designated Contracting States:
**DE FR GB**

(30) Priority: **07.10.1998 US 103440**
**19.11.1998 US 196896**

(43) Date of publication of application:
**12.04.2000 Bulletin 2000/15**

(73) Proprietor: **TEXAS INSTRUMENTS**
**INCORPORATED**
**Dallas, Texas 75251 (US)**

(72) Inventors:
• **Dabak, Anand G.**
**Richardson,**
**Texas 75082 (US)**
• **Hosur, Srinath (nmi)**
**Dallas,**
**Texas 75206 (US)**

(74) Representative: **Holt, Michael**
**Texas Instruments Limited**
**European Patents Department**
**800 Pavilion Drive**
**Northampton, NN4 7YL (GB)**

(56) References cited:
**US-A- 5 648 983**

• **TAROKH V ET AL: "New detection schemes for transmit diversity with no channel estimation" UNIVERSAL PERSONAL COMMUNICATIONS, 1998. ICUPC '98. IEEE 1998 INTERNATIONAL CONFERENCE ON FLORENCE, ITALY 5-9 OCT. 1998, NEW YORK, NY, USA,IEEE, US, 5 October 1998 (1998-10-05), pages 917-920, XP010315028 ISBN: 0-7803-5106-1**
• **ANDOH H ET AL: "Channel estimation using time multiplexed pilot symbols for coherent RAKE combining for DS-CDMA mobile radio" PERSONAL, INDOOR AND MOBILE RADIO COMMUNICATIONS, 1997. WAVES OF THE YEAR 2000. PIMRC '97., THE 8TH IEEE INTERNATIONAL SYMPOSIUM ON HELSINKI, FINLAND 1-4 SEPT. 1997, NEW YORK, NY, USA, IEEE, US, 1 September 1997 (1997-09-01), pages 954-958, XP010247589 ISBN: 0-7803-3871-5**

**Description**

**FIELD OF THE INVENTION**

This invention relates to wideband code division multiple access (WCDMA) for a communication system and more particularly to space time block coded transmit antenna diversity for channel estimation of WCDMA signals.

**BACKGROUND OF THE INVENTION**

Present code division multiple access (CDMA) systems are characterized by simultaneous transmission of different data signals over a common channel by assigning each signal a unique code. This unique code is matched with a code of a selected receiver to determine the proper recipient of a data signal. These different data signals arrive at the receiver via multiple paths due to ground clutter and unpredictable signal reflection. Additive effects of these multiple data signals at the receiver may result in significant fading or variation in received signal strength. In general, this fading due to multiple data paths may be diminished by spreading the transmitted energy over a wide bandwidth. This wide bandwidth results in greatly reduced fading compared to narrow band transmission modes such as frequency division multiple access (FDMA) or time division multiple access (TDMA).

New standards are continually emerging for next generation wideband code division multiple access (WCDMA) communication systems as described in Provisional U.S. Patent Application No. 60/082,671, filed April 22, 1998. These WCDMA systems are coherent communications systems with pilot symbol assisted channel estimation schemes. These pilot symbols are transmitted as quadrature phase shift keyed (QPSK) known data in predetermined time frames to any receivers within range. The frames may propagate in a discontinuous transmission (DTX) mode. For voice traffic, transmission of user data occurs when the user speaks, but no data symbol transmission occurs when the user is silent. Similarly for packet data, the user data may be transmitted only when packets are ready to be sent. The frames are subdivided into sixteen equal example, each time slot includes twenty symbol times. Each frame includes pilot symbols as well as other control symbols such as transmit power control (TPC) symbols and rate information (RI) symbols. These control symbols include multiple bits otherwise known as chips to distinguish them from data bits. The chip transmission time ($T_C$), therefore, is equal to the symbol time rate ($T$) divided by the number of chips in the symbol ($N$).

Previous studies have shown that multiple transmit antennas may improve reception by increasing transmit diversity for narrow band communication systems. In their paper New Detection Schemes for Transmit Diversity with no Channel Estimation, Tarokh et al. describe such a transmit diversity scheme for a TDMA system. The same concept is described in A Simple Transmitter Diversity Technique for Wireless Communications by Alamouti. Tarokh et al. and Alamouti, however, fail to teach such a transmit diversity scheme for a WCDMA communication system.

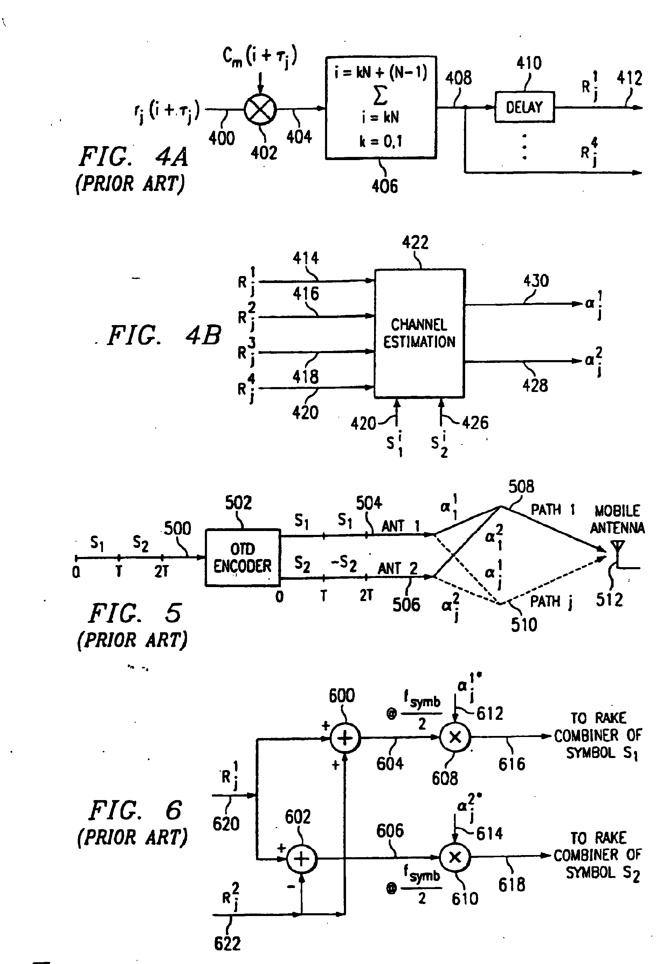

Other studies have investigated open loop transmit diversity schemes such as orthogonal transmit diversity (OTD) and time switched time diversity (TSTD) for WCDMA systems. Both OTD and TSTD systems have similar performance. Both use multiple transmit antennas to provide some diversity against fading, particularly at low Doppler rates and when there are insufficient paths for the rake receiver. Both OTD and TSTD systems, however, fail to exploit the extra path diversity that is possible for open loop systems. For example, the OTD encoder circuit of FIG. 5 receives symbols $S_1$ and $S_2$ on lead 500 and produces output signals on leads 504 and 506 for transmission by first and second antennas, respectively. A despreader input circuit (FIG. 4A) receives these transmitted signals. The despreader circuit sums received chip signals over a respective symbol time to produce first and second output signals $R_j^1$ and $R_j^2$ on leads 620 and 622 as in equations [1-2], respectively.

$$R_j^1 = \sum_{i=0}^{N-1} r_j(i + \tau_j) = \alpha_j^1 S_1 + \alpha_j^2 S_2 \qquad [1]$$

$$R_j^2 = \sum_{i=N}^{2N-1} r_j(i + \tau_j) = \alpha_j^1 S_1 - \alpha_j^2 S_2 \qquad [2]$$

The OTD phase correction circuit of FIG. 6 receives the output signals $R_j^1$ and $R_j^2$ corresponding to the $j^{th}$ of $L$ multiple signal paths. The phase correction circuit produces soft outputs or signal estimates $\overline{S}_1$ and $\overline{S}_2$ for symbols

$S_1$ and $S_2$ at leads 616 and 618 as shown in equations [3-4], respectively.

$$\tilde{S}_1 = \sum_{j=1}^{L}(R_j^1 + R_j^2)\alpha_j^{1*} = \sum_{j=1}^{L} 2\left|\alpha_j^1\right|^2 S_1 \qquad [3]$$

$$\tilde{S}_2 = \sum_{j=1}^{L}(R_j^1 - R_j^2)\alpha_j^{2*} = \sum_{j=1}^{L} 2\left|\alpha_j^2\right|^2 S_2 \qquad [4]$$

Equations [3-4] show that the OTD method provides a single channel estimate $\alpha$ for each path $j$. A similar analysis for the TSTD system yields the same result. The OTD and TSTD methods, therefore, are limited to a path diversity of $L$. This path diversity limitation fails to exploit the extra path diversity that is possible for open loop systems as will be explained in detail.

## SUMMARY OF THE INVENTION

These problems are resolved by a circuit comprising an estimate circuit coupled to receive a plurality of input signals from an external source along a plurality of paths and at least one known signal. The at least one known signal has a predetermined value. The estimate circuit produces a plurality of estimate signals corresponding to each respective signal path in response to the plurality of input signals and the at least one known signal. A correction circuit is coupled to receive the plurality of estimate signals and the plurality of input signals. The correction circuit produces a first symbol estimate in response to the plurality of estimate signals and the plurality of input signals. The correction circuit produces a second symbol estimate in response to the plurality of estimate signals and the plurality of input signals.

The present invention improves channel estimation by providing at least $2L$ diversity over time and space. No additional transmit power or bandwidth is required. Power is balanced across multiple antennas.

## BRIEF DESCRIPTION OF THE DRAWINGS

A more complete understanding of the invention may be gained by reading the subsequent detailed description with reference to the drawings wherein:

FIG. 1 is a simplified block diagram of a typical transmitter using Space Time Transit Diversity (STTD) of the present invention;
FIG. 2 is a block diagram showing signal flow in an STTD encoder of the present invention that may be used with the transmitter of FIG. 1;
FIG. 3 is a schematic diagram of a phase correction circuit of the present invention that may be used with a receiver;
FIG. 4A is a block diagram of a despreader circuit of the prior art that may be used with STTD of the present invention;
FIG. 4B is a block diagram of a channel estimation circuit that may be used with STTD of the present invention;
FIG. 5 is a block diagram showing signal flow in an OTD encoder of the prior art; and
FIG. 6 is a schematic diagram of a phase correction circuit of the prior art.

## DETAILED DESCRIPTION OF THE PREFERRED EMBODIMENTS

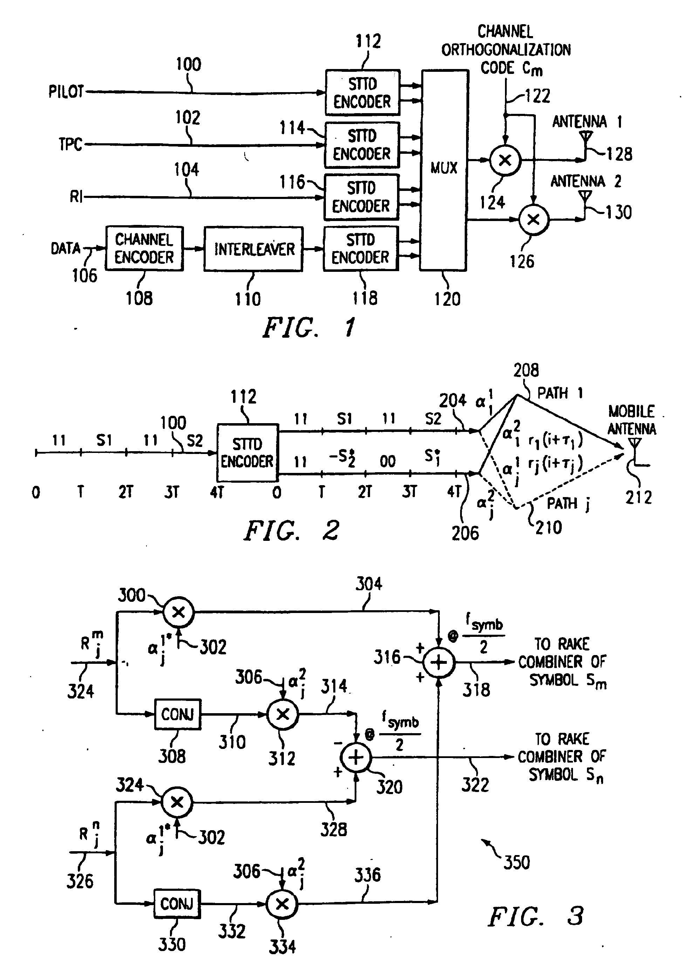

Referring to FIG. 1, there is a simplified block diagram of a typical transmitter using Space Time Transit Diversity (STTD) of the present invention. The transmitter circuit receives pilot symbols, TPC symbols, RI symbols and data symbols on leads 100, 102, 104 and 106, respectively. Each of the symbols is encoded by a respective STTD encoder as will be explained in detail. Each STTD encoder produces two output signals that are applied to multiplex circuit 120. The multiplex circuit 120 produces each encoded symbol in a respective symbol time of a frame. Thus, a serial sequence of symbols in each frame is simultaneously applied to each respective multiplier circuit 124 and 126. A channel orthogonal code $C_m$ is multiplied by each symbol to provide a unique signal for a designated receiver. The STTD encoded frames are then applied to antennas 128 and 130 for transmission.

Turning now to FIG. 2, there is a block diagram showing signal flow in an STTD encoder of the present invention that may be used with the transmitter of FIG. 1 for pilot symbol encoding. The pilot symbols are predetermined control signals that may be used for channel estimation and other functions as will be described in detail. Operation of the STTD encoder 112 will be explained with reference to TABLE 1. The STTD encoder receives pilot symbol 11 at symbol time $T$, pilot symbol $S_1$ at symbol time $2T$, pilot symbol 11 at symbol time $3T$ and pilot symbol $S_2$ at symbol time $4T$ on lead 100 for each of sixteen time slots of a frame. For a first embodiment of the present invention having a data rate of preferably 32 KSPS, the STTD encoder produces a sequence of four pilot symbols for each of two antennas corresponding to leads 204 and 206, respectively, for each of the sixteen time slots of TABLE 1. The STTD encoder produces pilot symbols $B_1$, $S_1$, $B_2$ and $S_2$ at symbol times $T\text{-}4T$, respectively, for a first antenna at lead 204. The STTD encoder simultaneously produces pilot symbols $B_1$, $-S_2^*$, $-B_2$ and $S_1^*$ at symbol times $T\text{-}4T$, respectively, at lead 206 for a second antenna. Each symbol includes two bits representing a real and imaginary component. An asterisk indicates a complex conjugate operation or sign change of the imaginary part of the symbol. Pilot symbol values for the first time slot for the first antenna at lead 204, therefore, are 11, 11, 11 and 11. Corresponding pilot symbols for the second antenna at lead 206 are 11, 01, 00 and 10.

The bit signals of these symbols are transmitted serially along respective paths 208 and 210. Each bit signal of a respective symbol is subsequently received at a remote mobile antenna 212 after a transmit time $\tau_j$ corresponding to the $j^{th}$ path. The signals propagate to a despreader input circuit (FIG. 4A) where they are summed over each respective symbol time by circuit 406 to produce output signals $R_j^1$, $R_j^2$, $R_j^3$ and $R_j^4$. These output signals correspond to the four pilot symbol time slots and the $j^{th}$ of $L$ multiple signal paths as previously described. These output signals are delayed by delay circuit 410 to produce simultaneous output signals.

These simultaneous output signals are applied as input signals to channel estimation circuit 422 (FIG. 4B). The channel estimation circuit 422 also receives known symbol signals $S_{1,i}$ and $S_{2,i}$, corresponding to the $i^{th}$ time slot of the frame. Thus, the path specific input signals together with corresponding known pilot symbols for a specific time slot are applied to the channel estimation circuit to determine separate Rayleigh fading channel estimates at leads 428 and 430 for each respective time slot.

TABLE 1

| SLOT | ANTENNA 1 | | | | ANTENNA 2 | | | |
|---|---|---|---|---|---|---|---|---|
| | $B_1$ | $S_1$ | $B_2$ | $S_2$ | $B_1$ | $-S_2^*$ | $-B_2$ | $S_1^*$ |
| 1 | 11 | 11 | 11 | 11 | 11 | 01 | 00 | 10 |
| 2 | 11 | 11 | 11 | 01 | 11 | 11 | 00 | 10 |
| 3 | 11 | 01 | 11 | 01 | 11 | 11 | 00 | 00 |
| 4 | 11 | 10 | 11 | 01 | 11 | 11 | 00 | 11 |
| 5 | 11 | 10 | 11 | 11 | 11 | 01 | 00 | 11 |
| 6 | 11 | 10 | 11 | 11 | 11 | 01 | 00 | 11 |
| 7 | 11 | 01 | 11 | 00 | 11 | 10 | 00 | 00 |
| 8 | 11 | 10 | 11 | 01 | 11 | 11 | 00 | 11 |
| 9 | 11 | 11 | 11 | 00 | 11 | 10 | 00 | 10 |
| 10 | 11 | 01 | 11 | 01 | 11 | 11 | 00 | 00 |
| 11 | 11 | 11 | 11 | 10 | 11 | 00 | 00 | 10 |
| 12 | 11 | 01 | 11 | 01 | 11 | 11 | 00 | 00 |
| 13 | 11 | 00 | 11 | 01 | 11 | 11 | 00 | 01 |
| 14 | 11 | 10 | 11 | 00 | 11 | 10 | 00 | 11 |
| 15 | 11 | 01 | 11 | 00 | 11 | 10 | 00 | 00 |
| 16 | 11 | 00 | 11 | 00 | 11 | 10 | 00 | 01 |

The input signals corresponding to the pilot symbols for each time slot are given in equations [5-8]. Noise terms are omitted for simplicity. Received signal $R_j^1$ is produced by pilot symbols $(B_1, B_1)$ having a constant value $(11,11)$ at symbol time $T$ for all time slots. Thus, the received signal is equal to the sum of respective Rayleigh fading parameters corresponding to the first and second antennas. Likewise, received signal $R_j^3$ is produced by pilot symbols $(B_2, -B_2)$ having a constant value $(11,00)$ at symbol time $3T$ for all time slots. Received signals $R_j^2$ and $R_j^4$, corresponding to symbol times $2T$ and $4T$, have values $(S_1, -S_2^*)$ and $(S_2, S_1^*)$, respectively, as indicated by TABLE 1. Channel estimates for the Rayleigh fading parameters corresponding to the first and second antennas, therefore, are readily determined from the input signals as in equations [9] and [10].

$$R_j^1 = \alpha_j^1 + \alpha_j^2 \qquad\qquad [5]$$

$$R_j^2 = \alpha_j^1 S_{1,i} - \alpha_j^2 S_{2,i}^* \qquad\qquad [6]$$

$$R_j^3 = \alpha_j^1 - \alpha_j^2 \qquad\qquad [7]$$

$$R_j^4 = \alpha_j^1 S_{2,i} + \alpha_j^2 S_{1,i}^* \qquad\qquad [8]$$

$$\alpha_j^1 = (R_j^1 + R_j^2 S_{1,i}^* + R_j^3 + R_j^4 S_{2,i}^*)/4 \qquad\qquad [9]$$

$$\alpha_j^2 = (R_j^1 - R_j^2 S_{2,i} - R_j^3 + R_j^4 S_{1,i})/4 \qquad\qquad [10]$$

Referring now to FIG. 3, there is a schematic diagram of a phase correction circuit of the present invention that may be used with a remote mobile receiver. This phase correction circuit receives input signals, for example, $R_j^m$ and $R_j^n$ on leads 324 and 326 corresponding to symbol times within the same time slot as the pilot symbols used for channel estimates. The phase correction circuit receives a complex conjugate of a channel estimate of a Rayleigh fading parameter $\alpha_j^{1*}$ corresponding to the first antenna on lead 302 and a channel estimate of another Rayleigh fading parameter $\alpha_j^2$ corresponding to the second antenna on lead 306. Complex conjugates of the input signals are produced by circuits 308 and 330 at leads 310 and 322, respectively. These input signals and their complex conjugates are multiplied by Rayleigh fading parameter estimate signals and summed as indicated to produce path-specific symbol estimates at respective output leads 318 and 322 as in equations [11] and [12].

$$R_j^m \alpha_j^{1*} + R_j^{n*} \alpha_j^2 = (|\alpha_j^1|^2 + |\alpha_j^2|^2) S_m \qquad\qquad [11]$$

$$-R_j^{m*} \alpha_j^2 + R_j^n \alpha_j^{1*} = (|\alpha_j^1|^2 + |\alpha_j^2|^2) S_n \qquad\qquad [12]$$

These path-specific symbol estimates are then applied to a rake combiner circuit to sum individual path-specific symbol estimates, thereby providing net soft symbols or pilot symbol signals as in equations [13] and [14].

$$\bar{S}_m = \sum_{j=1}^{L} R_j^m \alpha_j^{1*} + R_j^{n*} \alpha_j^2 \qquad [13]$$

$$\bar{S}_n = \sum_{j=1}^{L} - R_j^{m*} \alpha_j^2 + R_j^n \alpha_j^{1*} \qquad [14]$$

These soft symbols or estimates provide a path diversity L and a transmit diversity 2. Thus, the total diversity of the STTD system is *2L*. This increased diversity is highly advantageous in providing a reduced bit error rate.

Although the invention has been described in detail with reference to its preferred embodiment, it is to be understood that this description is by way of example only and is not to be construed in a limiting sense. For example, the pilot symbol patterns of TABLE 1 are suitable for data rates of 16, 32, 64 and 128 KSPS having four pilot symbols in each time slot. Other patterns produce a similar result. The pattern of TABLE 2, for example, applied to the second antenna produces the same result.

TABLE 2

| SLOT | $B_2^*$ | $-S_2^*$ | $-B_1^*$ | $S_1^*$ |
|------|------|------|------|------|
| 1 | 10 | 01 | 01 | 10 |
| 2 | 10 | 11 | 01 | 10 |
| 3 | 10 | 11 | 01 | 00 |
| 4 | 10 | 11 | 01 | 11 |
| 5 | 10 | 01 | 01 | 11 |
| 6 | 10 | 01 | 01 | 11 |
| 7 | 10 | 10 | 01 | 00 |
| 8 | 10 | 11 | 01 | 11 |
| 9 | 10 | 10 | 01 | 10 |
| 10 | 10 | 11 | 01 | 00 |
| 11 | 10 | 00 | 01 | 10 |
| 12 | 10 | 11 | 01 | 00 |
| 13 | 10 | 11 | 01 | 01 |
| 14 | 10 | 10 | 01 | 11 |
| 15 | 10 | 10 | 01 | 00 |
| 16 | 10 | 10 | 01 | 01 |

A change of pilot symbols from $(B_1, B_1)$ to ($B_2^*$, - $B_1^*$) in TABLE 2 produces equations [15-18] corresponding to previous equations [5-8], respectively. Thus, the channel estimates are readily determined as in equations [20] and [21], corresponding to previous equations [9] and [10], respectively.

$$R_j^1 = \alpha_j^1 B_1 + \alpha_j^2 B_2^* \qquad [15]$$

$$R_j^2 = \alpha_j^1 S_{1,i} - \alpha_j^2 S_{2,i}^* \qquad [16]$$

$$R_j^3 = \alpha_j^1 B_2 - \alpha_j^2 B_1^* \qquad [17]$$

$$R_j^4 = \alpha_j^1 S_{2,i} + \alpha_j^2 S_{1,i}^* \qquad [18]$$

$$\alpha_j^1 = (R_j^1 B_1^* + R_j^2 S_{1,i}^* + R_j^3 B_2^* + R_j^4 S_{2,i}^*)/4 \qquad [20]$$

$$\alpha_j^2 = (R_j^1 B_2 - R_j^2 S_{2,i} - R_j^3 B_1 + R_j^4 S_{1,i})/4 \qquad [21]$$

The inventive concept of the present invention is readily adaptable to other data rates having a number of pilot symbols other than four. For example, TABLE 3 and TABLE 4 give the pilot symbol patterns for data rates with two and eight pilot symbols in each time slot for the first and second antennas, respectively. Likewise, TABLE 5 and TABLE 6 give the pilot symbol patterns for data rates with sixteen pilot symbols in each time slot for the first and second antennas, respectively.

TABLE 3

| | 8 KSPS | | 256, 512, 1024 KSPS | | | | | | | |
|---|---|---|---|---|---|---|---|---|---|---|
| SLOT | 0 | 1 | 0 | 1 | 2 | 3 | 4 | 5 | 6 | 7 |
| 1 | 11 | 11 | 11 | 11 | 11 | 11 | 11 | 11 | 11 | 10 |
| 2 | 11 | 11 | 11 | 10 | 11 | 10 | 11 | 10 | 11 | 01 |
| 3 | 11 | 10 | 11 | 10 | 11 | 01 | 11 | 11 | 11 | 01 |
| 4 | 11 | 01 | 11 | 11 | 11 | 01 | 11 | 00 | 11 | 10 |
| 5 | 11 | 10 | 11 | 11 | 11 | 00 | 11 | 01 | 11 | 10 |
| 6 | 11 | 10 | 11 | 11 | 11 | 11 | 11 | 01 | 11 | 10 |
| 7 | 11 | 01 | 11 | 10 | 11 | 11 | 11 | 01 | 11 | 10 |
| 8 | 11 | 00 | 11 | 01 | 11 | 00 | 11 | 10 | 11 | 00 |
| 9 | 11 | 00 | 11 | 11 | 11 | 10 | 11 | 00 | 11 | 01 |
| 10 | 11 | 10 | 11 | 01 | 11 | 11 | 11 | 11 | 11 | 00 |
| 11 | 11 | 10 | 11 | 10 | 11 | 10 | 11 | 11 | 11 | 10 |
| 12 | 11 | 11 | 11 | 01 | 11 | 10 | 11 | 10 | 11 | 00 |
| 13 | 11 | 10 | 11 | 10 | 11 | 01 | 11 | 11 | 11 | 10 |
| 14 | 11 | 11 | 11 | 00 | 11 | 10 | 11 | 10 | 11 | 00 |
| 15 | 11 | 00 | 11 | 01 | 11 | 10 | 11 | 00 | 11 | 00 |
| 16 | 11 | 00 | 11 | 10 | 11 | 00 | 11 | 00 | 11 | 00 |

TABLE4

| SLOT | 8 KSPS | | 256, 512, 1024 KSPS | | | | | | | |
|------|----|----|----|----|----|----|----|----|----|----|
|      | 0  | 1  | 0  | 1  | 2  | 3  | 4  | 5  | 6  | 7  |
| 1  | 11 | 11 | 11 | 01 | 00 | 10 | 11 | 00 | 00 | 10 |
| 2  | 11 | 11 | 11 | 00 | 00 | 11 | 11 | 11 | 00 | 11 |
| 3  | 11 | 10 | 11 | 11 | 00 | 11 | 11 | 11 | 00 | 10 |
| 4  | 11 | 01 | 11 | 11 | 00 | 10 | 11 | 00 | 00 | 01 |
| 5  | 11 | 10 | 11 | 10 | 00 | 10 | 11 | 00 | 00 | 00 |
| 6  | 11 | 10 | 11 | 01 | 00 | 10 | 11 | 00 | 00 | 00 |
| 7  | 11 | 01 | 11 | 01 | 00 | 11 | 11 | 00 | 00 | 00 |
| 8  | 11 | 00 | 11 | 10 | 00 | 00 | 11 | 10 | 00 | 11 |
| 9  | 11 | 00 | 11 | 00 | 00 | 10 | 11 | 11 | 00 | 01 |
| 10 | 11 | 10 | 11 | 01 | 00 | 00 | 11 | 10 | 00 | 10 |
| 11 | 11 | 10 | 11 | 00 | 00 | 11 | 11 | 00 | 00 | 10 |
| 12 | 11 | 11 | 11 | 00 | 00 | 00 | 11 | 10 | 00 | 11 |
| 13 | 11 | 10 | 11 | 11 | 00 | 11 | 11 | 00 | 00 | 10 |
| 14 | 11 | 11 | 11 | 00 | 00 | 01 | 11 | 10 | 00 | 11 |
| 15 | 11 | 00 | 11 | 00 | 00 | 00 | 11 | 10 | 00 | 01 |
| 16 | 11 | 00 | 11 | 10 | 00 | 11 | 11 | 10 | 00 | 01 |

TABLE 5

| SLOT | 2048, 4096 KSPS | | | | | | | | | | | | | | | |
|------|----|----|----|----|----|----|----|----|----|----|----|----|----|----|----|----|
|      | 0  | 1  | 2  | 3  | 4  | 5  | 6  | 7  | 8  | 9  | 10 | 11 | 12 | 13 | 14 | 15 |
| 1  | 11 | 01 | 11 | 10 | 11 | 11 | 11 | 10 | 11 | 01 | 11 | 00 | 11 | 00 | 11 | 01 |
| 2  | 11 | 01 | 11 | 01 | 11 | 10 | 11 | 11 | 11 | 01 | 11 | 01 | 11 | 10 | 11 | 01 |
| 3  | 11 | 01 | 11 | 10 | 11 | 00 | 11 | 01 | 11 | 11 | 11 | 11 | 11 | 01 | 11 | 10 |
| 4  | 11 | 11 | 11 | 11 | 11 | 01 | 11 | 01 | 11 | 11 | 11 | 01 | 11 | 00 | 11 | 01 |
| 5  | 11 | 00 | 11 | 00 | 11 | 11 | 11 | 01 | 11 | 10 | 11 | 00 | 11 | 11 | 11 | 11 |
| 6  | 11 | 00 | 11 | 11 | 11 | 10 | 11 | 01 | 11 | 10 | 11 | 00 | 11 | 10 | 11 | 11 |
| 7  | 11 | 01 | 11 | 00 | 11 | 10 | 11 | 00 | 11 | 10 | 11 | 10 | 11 | 01 | 11 | 01 |
| 8  | 11 | 01 | 11 | 00 | 11 | 11 | 11 | 10 | 11 | 11 | 11 | 10 | 11 | 11 | 11 | 00 |
| 9  | 11 | 11 | 11 | 11 | 11 | 01 | 11 | 11 | 11 | 11 | 11 | 10 | 11 | 10 | 11 | 01 |
| 10 | 11 | 10 | 11 | 01 | 11 | 10 | 11 | 10 | 11 | 10 | 11 | 00 | 11 | 11 | 11 | 00 |
| 11 | 11 | 00 | 11 | 01 | 11 | 11 | 11 | 01 | 11 | 01 | 11 | 01 | 11 | 01 | 11 | 11 |
| 12 | 11 | 11 | 11 | 00 | 11 | 10 | 11 | 10 | 11 | 00 | 11 | 01 | 11 | 00 | 11 | 11 |
| 13 | 11 | 11 | 11 | 11 | 11 | 11 | 11 | 00 | 11 | 00 | 11 | 10 | 11 | 11 | 11 | 11 |
| 14 | 11 | 00 | 11 | 01 | 11 | 10 | 11 | 10 | 11 | 00 | 11 | 00 | 11 | 00 | 11 | 10 |
| 15 | 11 | 00 | 11 | 11 | 11 | 10 | 11 | 00 | 11 | 10 | 11 | 01 | 11 | 01 | 11 | 11 |
| 16 | 11 | 00 | 11 | 00 | 11 | 00 | 11 | 11 | 11 | 00 | 11 | 10 | 11 | 01 | 11 | 00 |

TABLE 6

| SLOT | 2048, 4096 KSPS | | | | | | | | | | | | | | | |
|---|---|---|---|---|---|---|---|---|---|---|---|---|---|---|---|---|
| | 0 | 1 | 2 | 3 | 4 | 5 | 6 | 7 | 8 | 9 | 10 | 11 | 12 | 13 | 14 | 15 |
| 1 | 11 | 00 | 00 | 00 | 11 | 00 | 00 | 10 | 11 | 10 | 00 | 00 | 11 | 11 | 00 | 01 |
| 2 | 11 | 11 | 00 | 00 | 11 | 01 | 00 | 11 | 11 | 11 | 00 | 00 | 11 | 11 | 00 | 11 |
| 3 | 11 | 00 | 00 | 00 | 11 | 11 | 00 | 01 | 11 | 01 | 00 | 10 | 11 | 00 | 00 | 00 |
| 4 | 11 | 01 | 00 | 10 | 11 | 11 | 00 | 00 | 11 | 11 | 00 | 10 | 11 | 11 | 00 | 01 |
| 5 | 11 | 10 | 00 | 01 | 11 | 11 | 00 | 10 | 11 | 10 | 00 | 11 | 11 | 01 | 00 | 10 |
| 6 | 11 | 01 | 00 | 01 | 11 | 11 | 00 | 11 | 11 | 10 | 00 | 11 | 11 | 01 | 00 | 11 |
| 7 | 11 | 10 | 00 | 00 | 11 | 10 | 00 | 11 | 11 | 00 | 00 | 11 | 11 | 11 | 00 | 00 |
| 8 | 11 | 10 | 00 | 00 | 11 | 00 | 00 | 10 | 11 | 00 | 00 | 10 | 11 | 10 | 00 | 10 |
| 9 | 11 | 01 | 00 | 10 | 11 | 01 | 00 | 00 | 11 | 00 | 00 | 10 | 11 | 11 | 00 | 11 |
| 10 | 11 | 11 | 00 | 11 | 11 | 00 | 00 | 11 | 11 | 10 | 00 | 11 | 11 | 10 | 00 | 10 |
| 11 | 11 | 11 | 00 | 01 | 11 | 11 | 00 | 10 | 11 | 11 | 00 | 00 | 11 | 01 | 00 | 00 |
| 12 | 11 | 10 | 00 | 10 | 11 | 00 | 00 | 11 | 11 | 11 | 00 | 01 | 11 | 01 | 00 | 01 |
| 13 | 11 | 01 | 00 | 10 | 11 | 10 | 00 | 10 | 11 | 00 | 00 | 01 | 11 | 01 | 00 | 10 |
| 14 | 11 | 11 | 00 | 01 | 11 | 00 | 00 | 11 | 11 | 10 | 00 | 01 | 11 | 00 | 00 | 01 |
| 15 | 11 | 01 | 00 | 01 | 11 | 10 | 00 | 11 | 11 | 11 | 00 | 11 | 11 | 01 | 00 | 00 |
| 16 | 11 | 10 | 00 | 01 | 11 | 01 | 00 | 01 | 11 | 00 | 00 | 01 | 11 | 10 | 00 | 00 |

It is understood that the inventive concept of the present invention may be embodied in a mobile communication system as well as circuits within the mobile communication system. It is to be further understood that numerous changes in the details of the embodiments of the invention will be apparent to persons of ordinary skill in the art having reference to this description.
For example, alternative embodiments envisaged by the inventors include:

- the total path diversity of each of the first and second symbol signals is at least twice the number of transmitting antennas;
- the plurality of input signals includes four input signals, each of the four input signals including at least one pilot symbol signal, and the at least one known signal including two known pilot symbol signals;
- the first input signal of the plurality of input signals is transmitted from a first antenna and a second input signal of the plurality of input signals is transmitted by a second antenna;
- each of the plurality of input signals includes at least one pilot symbol;
- the plurality of input signals being wideband code division multiple access signals received in a transmitted frame, and the plurality of input signals being received during a time slot of the frame;
- an input circuit coupled to receive a plurality of signals from the external source along a plurality of signal paths, the input circuit producing the plurality of input signals such that each input signal corresponds to at least two signals;
- a combining circuit coupled to receive a plurality of first symbol estimates including the first symbol estimate and a plurality of second symbol estimates including the second symbol estimate, the correction circuit producing at least one first symbol signal in response to the plurality of first symbol estimates and at least one second symbol signal in response to the plurality of second symbol estimates;
- the input circuit, the estimate circuit, the correction circuit and the combining circuit are formed on a single integrated circuit;
- each of the first and second input signals is a wideband code division multiple access signal.

It is contemplated that these and other such changes and additional embodiments are within the scope of the claimed invention.

**Claims**

1. Channel estimation Circuitry for a WCDMA system, said Circuitry comprising:

an estimate circuit (422) coupled for receiving a plurality of input signals ($R_j^1, R_j^2$) from an external source along a plurality of paths (*j*) and at least one known signal ($S_1$), the at least one known signal having a predetermined value, the estimate circuit arranged for producing a plurality of estimate signals ($\alpha_j^1, \alpha_j^2$) corresponding to each respective signal path in response to the plurality of input signals and the at least one known signal; **characterised in that** it further includes:

a correction circuit (350) coupled for receiving the plurality of estimate signals and the plurality of input signals, the correction circuit arranged for producing a first symbol estimate ($S_m$) in response to the plurality of estimate signals and the plurality of input signals, the correction circuit further arranged for producing a second symbol ($S_n$) estimate in response to the plurality of estimate signals and the plurality of input signals; and
a combining circuit coupled for receiving a plurality of first symbol estimates including the first symbol estimate and a plurality of second symbol estimates including the second symbol estimate, the correction circuit arranged for producing at least one first symbol signal ($\overline{S}_m$) in response to the plurality of first symbol estimates and at least one second symbol signal ($\overline{S}_n$) in response to the plurality of second symbol estimates.

2. Circuitry as in claim 1, wherein each of the plurality of input signals includes at least one pilot symbol.

3. Circuitry as in claim 2, wherein the plurality of input signals are wideband code division multiple access signals received in a transmitted frame and wherein the plurality of input signals are received from a time slot of the frame.

4. Circuitry as in any preceding claim further comprising:

an input circuit coupled for receiving a plurality of bit signals from the external source along a plurality of signal paths, the input circuit arranged for producing the plurality of input signals, each input signal corresponding to at least two signals.

5. Circuitry as claimed in any preceding claim, wherein each of the plurality of estimate signals is a Rayleigh fading parameter estimate.

6. A method of processing signals in a WCDMA communications circuit, said method comprising the steps of:

receiving a plurality of groups of input signals during a predetermined period from an external source along plural signal paths, each group of the plurality of groups being equally spaced apart from another group in time;
producing at least two estimate signals corresponding to each path of the plural signal paths in response to each group and at least one known signal;
producing a plurality of symbol estimate signals in response to said at least two estimate signals and a plurality of said input signals;
combining symbol estimate signals corresponding to different paths from said plurality of symbol estimate signals; and
producing a symbol signal in response to said step of combing.

7. A method of processing signals in a communication circuit as in claim 6, wherein the step of producing at least two estimate signals includes producing at least two Rayleigh fading parameter estimate signals corresponding to each path of the plural signal paths.

8. A method of processing signals in a communication circuit as in claim 6 or claim 7, wherein said each group is a group of pilot symbols in a respective time slot and wherein said being equally spaced apart includes being spaced apart in another time slot.

9. A method of processing signals in a communication circuit as in any of claims 6 to 8, further comprising the steps of:

receiving a plurality of input signals from the external source; and
producing a plurality of symbol estimate signals in response to respective said at least two estimate signals and said plurality of input signals.

**10.** A mobile communication system, comprising:

a mobile antenna arranged to receive a plurality of input signals from an external source along a respective plurality of signal paths; and
circuitry as claimed in any of claims 1 to 5.

**Patentansprüche**

**1.** Kanalschätzungs-Schaltungsanordnung für ein WCDMA-System, wobei die Schaltungsanordnung umfasst:

eine Schätzschaltung (422), die so angeschlossen ist, dass sie mehrere Eingangssignale ($R_j^1, R_j^2$) von einer externen Quelle auf mehreren Pfaden ($j$) und wenigstens ein bekanntes Signal ($S_1$) empfängt, wobei das wenigstens eine bekannte Signal einen vorgegebenen Wert hat, wobei die Schätzschaltung so beschaffen ist, dass sie in Reaktion auf die mehreren Eingangssignale und das wenigstens eine bekannte Signal mehrere Schätzsignale ($\alpha_j^1, \alpha_j^2$), die den jeweiligen Signalpfaden entsprechen, erzeugt; **dadurch gekennzeichnet, dass** sie ferner umfasst:

eine Korrekturschaltung (350), die so angeschlossen ist, dass sie die mehreren Schätzsignale und die mehreren Eingangssignale empfängt, wobei die Korrekturschaltung so beschaffen ist, dass sie in Reaktion auf die mehreren Schätzsignale und die mehreren Eingangssignale eine erste Symbolschätzung ($S_m$) erzeugt, wobei die Korrekturschaltung ferner so beschaffen ist, dass sie in Reaktion auf die mehreren Schätzsignale und die mehreren Eingangssignale eine zweite Symbolschätzung ($S_n$) erzeugt; und
eine Kombinationsschaltung, die so angeschlossen ist, dass sie mehrere erste Symbolschätzungen einschließlich der ersten Symbolschätzung und mehrere zweite Symbolschätzungen einschließlich der zweiten Symbolschätzung empfängt, wobei die Korrekturschaltung so beschaffen ist, dass sie in Reaktion auf die mehreren ersten Symbolschätzungen wenigstens ein erstes Symbolsignal ($\tilde{S}_m$) und in Reaktion auf die mehreren zweiten Symbolschätzungen wenigstens ein zweites Symbolsignal ($\tilde{S}_n$) erzeugt.

**2.** Schaltungsanordnung nach Anspruch 1, bei der jedes der mehreren Eingangssignale wenigstens ein Pilotsignal enthält.

**3.** Schaltungsanordnung nach Anspruch 2, bei der die mehreren Eingangssignale Breitband-Codemultiplex-Vielfachzugriff-Signale sind, die in einem gesendeten Rahmen empfangen werden, und bei der die mehreren Eingangssignale von einem Zeitschlitz des Rahmens empfangen werden.

**4.** Schaltungsanordnung nach einem vorhergehenden Anspruch, die ferner umfasst:

eine Eingangsschaltung, die so angeschlossen ist, dass sie mehrere Bit-Signale auf mehreren Signalpfaden von der externen Quelle empfängt, wobei die Eingangsschaltung so beschaffen ist, dass sie die mehreren Eingangssignale erzeugt, wobei jedes Eingangssignal wenigstens zwei Signalen entspricht.

**5.** Schaltungsanordnung nach einem vorhergehenden Anspruch, bei der jedes der mehreren Schätzsignale eine Schätzung des Rayleigh-Fading-Parameters ist.

**6.** Verfahren zum Verarbeiten von Signalen in einer WCDMA-Kommunikationsschaltung, wobei das Verfahren die folgenden Schritte umfasst:

Empfangen mehrerer Gruppen von Eingangssignalen auf mehreren Signalpfaden von einer externen Quelle während einer vorgegebenen Periode, wobei jede der mehreren Gruppen von einer jeweils weiteren Gruppe zeitlich gleich beabstandet ist;
Erzeugen von wenigstens zwei Schätzsignalen, die jedem Pfad der mehreren Signalpfade entsprechen, in Reaktion auf jede Gruppe und wenigstens ein bekanntes Signal;
Erzeugen mehrerer Symbolschätzsignale in Reaktion auf die wenigstens zwei Schätzsignale und mehrere der Eingangssignale;
Kombinieren von Symbolschätzsignalen, die unterschiedlichen Pfaden entsprechen, unter den mehreren Symbolschätzsignalen; und
Erzeugen eines Symbolsignals in Reaktion auf den Kombinationsschritt.

**7.** Verfahren zum Verarbeiten von Signalen in einer Kommunikationsschaltung nach Anspruch 6, bei dem der Schritt des Erzeugens von wenigstens zwei Schätzsignalen das Erzeugen von wenigstens zwei Schätzsignalen des Rayleigh-Fading-Parameters, die jedem der mehreren Signalpfade entsprechen, umfasst.

**8.** Verfahren zum Verarbeiten von Signalen in einer Kommunikationsschaltung nach Anspruch 6 oder Anspruch 7, bei dem jede Gruppe eine Gruppe von Pilotsignalen in einem entsprechenden Zeitschlitz ist und bei dem der gleiche Abstand einen Abstand in einem weiteren Zeitschlitz umfasst.

**9.** Verfahren zum Verarbeiten von Signalen in einer Kommunikationsschaltung nach einem der Ansprüche 6 bis 8, das ferner die folgenden Schritte umfasst:

Empfangen mehrerer Eingangssignale von der externen Quelle; und
Erzeugen mehrerer Symbolschätzsignale in Reaktion auf Entsprechende der wenigstens zwei Schätzsignale und der mehreren Eingangssignale.

**10.** Mobilkommunikationssystem, das umfasst:

eine Mobilantenne, die so beschaffen ist, dass sie mehrere Eingangssignale auf mehreren entsprechenden Signalpfaden von einer externen Quelle empfängt; und
eine Schaltungsanordnung nach einem der Ansprüche 1 bis 5.

**Revendications**

**1.** Circuits d'estimation de canal pour un système WCDMA lesdits circuits comprenant :

un circuit d'estimation (422) couplé pour recevoir une pluralité de signaux d'entrée ($R_j^1, R_j^2$) à partir d'une source externe, suivant une pluralité de chemins (j) et au moins un signal (S1) connu, le au moins un signal connu ayant une valeur prédéterminée, le circuit d'estimation étant agencé pour produire une pluralité de signaux d'estimation ($\alpha_j^1, \alpha_j^2$) correspondant à chaque chemin de signal respectif en réponse à la pluralité des signaux d'entrée et du au moins un signal connu, **caractérisés en ce qu'**il comprend en outre :

un circuit de correction (350), couplé pour recevoir la pluralité de signaux d'estimation et la pluralité de signaux d'entrée, le circuit de correction étant agencé pour produire une première estimation de symbole ($S_m$) en réponse à la pluralité de signaux d'estimation et à la pluralité de signaux d'entrée, le circuit de correction étant en outre agencé pour produire une deuxième estimation de symbole ($S_n$) en réponse à la pluralité de signaux d'estimation et à la pluralité de signaux d'entrée ; et
un circuit de combinaison couplé pour recevoir une pluralité de premières estimations de symbole, incluant la première estimation de symbole et une pluralité de deuxièmes estimations de symbole incluant la deuxième estimation de symbole, le circuit de correction étant agencé pour produire au moins un premier signal de symbole ($\tilde{S}_m$) en réponse à la pluralité des premières estimations de symbole et au moins un deuxième signal de symbole ($\tilde{S}_m$) en réponse à la pluralité des deuxièmes estimations de symbole.

**2.** Circuits selon la revendication 1, dans lesquels chacun de la pluralité des signaux d'entrée comprend au moins un symbole pilote.

**3.** Circuits selon la revendication 2, dans lesquels la pluralité des signaux d'entrée sont des signaux d'accès multiple par répartition en code à bande large, reçus dans une trame transmise, et dans lesquels la pluralité des signaux d'entrée sont reçus depuis une fenêtre temporelle de la trame.

4. Circuits selon l'une quelconque des revendications précédentes, comprenant en outre :

   un circuit d'entrée, couplé pour recevoir une pluralité de signaux de bit depuis la source externe, suivant une pluralité de chemins de signaux, le circuit d'entrée étant agencé pour produire la pluralité de signaux d'entrée, chaque signal d'entrée correspondant à au moins deux signaux.

5. Circuits revendiqués à l'une quelconque des revendications précédentes, dans lesquels chacun de la pluralité des signaux d'estimation est une estimation de paramètre d'évanouissement de Rayleigh.

6. Un procédé de traitement de signaux dans un circuit de communications WCDMA, ledit procédé comprenant les étapes de :

   réception d'une pluralité de groupes de signaux d'entrée durant une période prédéterminée, d'une source externe, suivant une pluralité de chemins de signaux, chaque groupe de la pluralité de groupes étant espacé de manière égale d'un autre groupe, dans le temps ;
   production d'au moins deux signaux d'estimation correspondant à chaque chemin de la pluralité de chemins de signaux, en réponse à chaque groupe et à au moins un signal connu ;
   production d'une pluralité de signaux d'estimation de symbole, en réponse auxdits au moins deux signaux d'estimation et à une pluralité desdits signaux d'entrée ;
   combinaison des signaux d'estimation de symbole correspondant à différents chemins, à partir de la pluralité des signaux d'estimation de symbole ; et
   production d'un signal de symbole en réponse à ladite étape de combinaison.

7. Un procédé de traitement de signaux dans un circuit de communication, selon la revendication 6, dans lequel l'étape de production d'au moins deux signaux d'estimation comprend la production d'au moins deux signaux d'estimation de paramètre d'évanouissement de Rayleigh correspondant à chaque chemin de la pluralité des chemins de signaux.

8. Un procédé de production de signaux dans un circuit de communication, selon la revendication 6 ou la revendication 7, dans lequel chaque dit groupe est un groupe de symboles pilotes dans une fenêtre temporelle respective, et dans lequel ladite caractéristique d'espacement de manière égale comprend un espacement en une autre fenêtre temporelle.

9. Un procédé de traitement de signaux dans un circuit de communication selon l'une quelconque des revendications 6 à 8, comprenant en outre les étapes de :

   réception d'une pluralité de signaux d'entrée venant de la source externe ; et
   production d'une pluralité de signaux d'estimation de symbole en réponse auxdits au moins deux signaux d'estimation respectifs et à ladite pluralité de signaux d'entrée.

10. Un système de communication mobile, comprenant :

    une antenne mobile, agencée pour recevoir une pluralité de signaux d'entrée venant d'une source externe, sur une pluralité respective de chemins de signaux ; et
    des circuits tels que revendiqués à l'une quelconque des revendications 1 à 5.

FIG. 1

FIG. 2

FIG. 3

$C_m(i + \tau_j)$

$r_j(i + \tau_j)$ —→ ⊗ —→ 404 —→ | $i = kN + (N-1)$<br>$\sum$<br>$i = kN$<br>$k = 0,1$ | —→ 408 —→ | DELAY | —→ $R_j^1$ 412

400 402 406 410

$R_j^4$

*FIG. 4A*
*(PRIOR ART)*

$R_j^1$ —→ 414

$R_j^2$ —→ 416

$R_j^3$ —→ | CHANNEL ESTIMATION | —→ 430 —→ $\alpha_j^1$

$R_j^4$ —→ 418 —→ 428 —→ $\alpha_j^2$

420

*FIG. 4B*

422

420 426

$S_1^i$ $S_2^i$

$S_1$ $S_2$ 500 —→ | OTD ENCODER | $S_1$ $S_1$ 504 ANT 1 $\alpha_1^1$ 508 PATH 1 MOBILE ANTENNA

0 T 2T 502 $S_2$ $-S_2$ ANT 2 $\alpha_1^2$

0 T 2T 506 $\alpha_j^1$

$\alpha_j^2$ PATH j 512

510

*FIG. 5*
*(PRIOR ART)*

600

$\alpha_j^{1*}$ 612

$R_j^1$ —→ ⊕ + —→ 604 @ $\dfrac{f_{symb}}{2}$ —→ ⊗ —→ 616 TO RAKE COMBINER OF SYMBOL $S_1$

620 + 608

602

$\alpha_j^{2*}$ 614

—→ ⊕ + 606 —→ @ $\dfrac{f_{symb}}{2}$ —→ ⊗ —→ 618 TO RAKE COMBINER OF SYMBOL $S_2$

$R_j^2$ — 610

622

*FIG. 6*
*(PRIOR ART)*